# EUROPÄISCHE PATENTSCHRIFT

(11) **EP 3 825 065 B1**
(45) Veröffentlichungstag und Bekanntmachung des Hinweises auf die Patenterteilung: **14.02.2024**
(21) Anmeldenummer: 19209944.8
(22) Anmeldetag: 19.11.2019
(51) Int. Cl.: B25F 5/00

(54) **AKKUBETRIEBENES ARBEITSGERÄT MIT KÜHLLUFTFÜHRUNG**
BATTERY-POWERED TOOL WITH COOLING AIR GUIDANCE
APPAREIL DE TRAVAIL FONCTIONNANT SUR ACCUMULATEUR DOTÉ D'UN CONDUIT D'AIR DE REFROIDISSEMENT

(43) Veröffentlichungstag der Anmeldung: 26.05.2021
(73) Patentinhaber: Andreas Stihl AG & Co. KG, 71336 Waiblingen (DE)
(72) Erfinder: Heinzelmann, Georg, 71364 Winnenden (DE); Fallenschmid, Martin, 70329 Stuttgart (DE); Herrmann, Frederik, 71334 Waiblingen (DE)
(74) Vertreter: Patentanwälte Ruff, Wilhelm, Beier, Dauster & Partner mbB

(56) Entgegenhaltungen:
- EP-A1- 2 747 949
- EP-A2- 2 535 149
- DE-A1-102009 015 422
- JP-A- 2016 007 680
- US-A1- 2006 222 930
- US-A1- 2015 263 592
- US-A1- 2018 131 058
- US-A1- 2019 262 753

## Beschreibung

Die Erfindung bezieht sich auf ein handgeführtes, akkubetriebenes Arbeitsgerät nach dem Oberbegriff des Anspruchs 1.

Ein solches Arbeitsgerät beinhaltet unter anderem ein Gerätegehäuse, einen elektrischen Antriebsmotor im Gerätegehäuse, einen Akkuschacht im Gerätegehäuse zur Aufnahme eines entnehmbaren Akkupacks und eine Kühlluftführung im Gerätegehäuse, die einen eintrittsseitigen Luftführungsabschnitt, der sich von einem Gehäuseeintritt in den Akkuschacht bis zu einem Luftaustritt aus dem Akkuschacht erstreckt, und einen austrittsseitigen Luftführungsabschnitt umfasst, der vom Luftaustritt des Akkuschachts zum Antriebsmotor und von dort zu einem Gehäuseaustritt weiterführt. Der Akkupack dient der Energieversorgung des Antriebsmotors, und der Antriebsmotor kann durch Kühlluft gekühlt werden, die durch die Kühlluftführung geführt wird. Optional kann auch der Akkupack durch die Kühlluft gekühlt werden.

Die Offenlegungsschrift EP 2 431 134 A2 offenbart ein Arbeitsgerät mit diesen Komponenten in Form einer Motorsäge, die ein auf einer Motorwelle des Antriebsmotors befestigtes Gebläserad zum Ansaugen eines Kühlluftstroms aufweist, der zur Kühlung des Antriebsmotors und einer elektronischen Steuerung dient. Der Akkupack wird beim Einschieben an einander zugewandten Wandseiten durch Führungsstege geführt, wobei ein Spalt zwischen den Wänden und dem Akkupack verbleibt, so dass durch geeignete Luftführung des Kühlluftstroms auch eine Kühlung des Akkupacks gegeben ist. Eine ähnliche Motorsäge dieser Art ist in der Offenlegungsschrift DE 10 2010 045 994 A1 offenbart.

Die Gebrauchsmusterschrift CN 205993049 U offenbart ein weiteres Arbeitsgerät mit diesen Komponenten Art in Form einer Motorsäge, bei der die Kühlluftführung ein Gebläse beinhaltet, das am Luftaustritt aus dem Akkuschacht stromaufwärts des Antriebsmotors angeordnet ist.

Die Offenlegungsschrift US 2018/0131058 A1 offenbart ein akkubetriebenes Arbeitsgerät in Form eines handgetragenen Winkelschleifers oder einer handgetragenen Bohrmaschine, bei dem der Akkupack an eine Endseite eines Gerätegehäuses ankoppelbar ist, wozu er in einer zu dieser Endseite im Wesentlichen parallelen Richtung aufschiebbar ist, und die Kühlluftführung einen ersten und einen zweiten Luftführungspfad beinhaltet, die in einem eintrittsseitigen Abschnitt strömungstechnisch parallel verlaufen und in einem austrittsseitigen Abschnitt zusammengeführt sind und zu einem gemeinsamen Luftauslass am Gehäuse führen. Der erste Luftführungspfad mündet eintrittsseitig über einen akkupackseitigen Lufteintritt in den angekoppelten Akkupack ein, führt durch diesen hindurch und mündet über einen akkupackseitigen Luftauslass in einen zugehörigen anschließenden Luftführungsabschnitt. Der zweite Luftführungspfad mündet über einen gehäuseseitigen Lufteintritt in das Gehäuse ein und verläuft bis zum Vereinigungspunkt strömungstechnisch parallel zu dem Luftführungsabschnitt des ersten Luftführungspfades. Mindestens einer der beiden Luftführungspfade ist über ein Elektronikbauteil und einen Antriebsmotor geführt, wobei stromabwärts des Antriebsmotors ein Gebläse angeordnet ist.

Die Patentschrift JP 6252778 B2 offenbart einen akkubetriebenen Winkelschleifer mit einem länglichen, zylinderförmigen Gerätegehäuse, einem elektrischen Antriebsmotor im Gerätegehäuse, einem an das Gerätegehäuse ankoppelbaren Akkupack und einer Kühlluftführung im Gerätegehäuse. Das Gerätegehäuse weist an einer ersten Stirnseite das Schleifwerkzeug und auf der anderen Stirnseite ein Befestigungsmittel zum lösbaren Anbringen des Akkupacks auf. Benachbart zu diesem Befestigungsmittel weist die Kühlluftführung einen seitlichen Gehäuseeintritt in das Gerätegehäuse auf, an dem ein Filterelement positionierbar ist, das hierzu in eine Aufnahme am Gerätegehäuse herausnehmbar eingefügt werden kann. Der an das Gerätegehäuse angekoppelte Akkupack sichert das Filterelement gegen Herausbewegen aus seiner Filteraufnahme, d.h. zum Anbringen und Entnehmen des Filterelements ist jeweils zuvor der Akkupack vom Gerätegehäuse abzunehmen. Speziell ist hierbei das Filterelement parallel zu einer Längsachse des Gerätegehäuses in seine Aufnahme einsetzbar und aus dieser herausnehmbar, während der Akkupack senkrecht zur Längsachse des Gerätegehäuses auf das zugehörige Stirnende des Gerätegehäuses aufgeschoben bzw. wieder abgenommen wird.

Gattungsgemäße Arbeitsgeräte nach dem Oberbegriff des Anspruchs 1 beinhalten zusätzlich zu den genannten Komponenten ein Filterelement, das in der Kühlluftführung über den Akkuschacht zugänglich angeordnet ist. Bei einem in der Offenlegungsschrift EP 3 552 769 A1 offenbarten Arbeitsgerät dieser Art in Form einer Motorsäge ist der Akkuschacht durch eine frontseitige Trennwand von einem Aufnahmeraum getrennt, in dem der Antriebsmotor untergebracht ist, und das Filterelement ist als plattenförmiges Bauteil seitlich am Akkuschacht, speziell an einer linken Seitenwand des Akkuschachts mit Abstand zu einer Innenseite einer linken Sägengehäusewand, angeordnet.

Die Offenlegungsschrift US 2015/0263592 A1 offenbart einen Trennschleifer, bei dem ein Batteriepack an der Rückseite eines Batterieanbringungsteils eines Hauptgehäuses angesteckt ist und ein Filterelement an Lufteinlässen auf gegenüberliegenden Seiten des Batterieanbringungsteils angeordnet ist.

Die Offenlegungsschrift WO 2013/032372 A1 offenbart eine Motorsäge mit einem Akkuschacht und mit einem Sägengehäuse, das seitlich mit Lufteinlässen versehen ist, an denen sich ein Filterelement befinden kann.

Die Offenlegungsschrift US 2006/0222930 A1 offenbart eine Handbohrmaschine, an die von unten ein Akkupack in einen unteren Bereich eines Griffteils angesteckt werden kann, wobei der Akkupack Lufteinlässe aufweist, die von einem Filterelement bedeckt sein können.

Der Erfindung liegt als technisches Problem die Bereitstellung eines handgeführten, akkubetriebenen Arbeitsgeräts der eingangs genannten Art zugrunde, das gegenüber dem oben erwähnten Stand der Technik weiter verbessert ist, insbesondere hinsichtlich der Kühlluftführung und/oder der Positionierung und Zugänglichkeit des Filterelements.

Die Erfindung löst dieses Problem durch die Bereitstellung eines handgeführten, akkubetriebenen Arbeitsgeräts mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird.

Bei dem erfindungsgemäßen Arbeitsgerät sind in vorteilhafter Weise die Maßnahmen optimiert, den Akkupack in einem Akkuschacht im Gerätegehäuse unterzubringen, Kühlluft in den Akkuschacht einzuleiten und von dort im Gerätegehäuse weiterzuführen und ein Filterelement in der Kühlluftführung über den Akkuschacht zugänglich anzuordnen und mit diesem eine Filterung von in der Kühlluftführung geführter Kühlluft zu ermöglichen. Die Positionierung des Filterelements derart, dass es über den Akkuschacht zugänglich ist, hat den Vorteil, dass einerseits das Filterelement zugänglich ist, beispielsweise zu Reinigungszwecken, wenn sich der Akkupack nicht im Akkuschacht befindet, und andererseits der Akkupack, wenn er in den Akkuschacht eingesetzt ist, das Filterelement gegen schädliche äußere Einflüsse schützt bzw. verbirgt. Das Filterelement kann auf diese Weise problemlos an einer im Betrieb des Arbeitsgeräts mit in den Akkuschacht eingesetztem Akkupack optisch nicht einsehbaren Stelle im Gerätegehäuse positioniert sein und kann daher unabhängig von gewünschten Anforderungen an das äußere Gehäusedesign ausgelegt werden.

Dabei verläuft der eintrittsseitige Luftführungsabschnitt der Kühlluftführung im Anschluss an seinen Gehäuseeintritt in den Akkuschacht in vorteilhaften Ausführungen der Erfindung vollständig oder jedenfalls mit einem von mehreren parallelen Luftführungswegen in einem akkupackfreien Teil des Akkuschachts, d.h. in einem bei in den Akkuschacht eingesetztem Akkupack nicht vom Akkupack belegten Bereich des Akkuschachts. Die in diesem Bereich zwischen dem Akkupack und einer Randbegrenzung des Akkuschachts geführte Kühlluft strömt dann am Akkupack vorbei bzw. an einer oder mehreren Außenwänden des Akkupacks entlang und nicht durch den Akkupack hindurch. Dadurch kann der in den Akkuschacht eingesetzte Akkupack ausreichend gekühlt werden, ohne dass zwingend Kühlluft durch den Akkupack hindurchgeleitet werden muss.

In vorteilhaften Ausführungen der Erfindung ist das Gerätegehäuse gezielt derart abgedichtet, dass in der Kühlluftführung geführte Kühlluft im Wesentlichen nur an dem Gehäuseeintritt in den Akkuschacht in das Gerätegehäuse gelangt. Mit einer solchen Gehäuseabdichtung kann folglich eine definierte Führung der Kühlluft durch die hierzu eingerichtete Kühlluftführung bereitgestellt werden, wobei die Kühlluft am Gehäuseeintritt in den Akkuschacht, von dort zum Luftaustritt aus dem Akkuschacht und anschließend zum Antriebsmotor und weiter zum Gebläseaustritt gelangt, ohne dass diese gezielte Führung des Kühlluftstroms durch eine spürbare Menge an Fremdluft gestört wird, die an anderer Stelle in das Gerätegehäuse gelangt.

Gemäß einem Aspekt der Erfindung ist das Filterelement im Inneren des Akkuschachts in Luftströmungsrichtung vor dem Luftaustritt des Akkuschachts angeordnet. Bei dieser Positionierung ist das Filterelement direkt über den Akkuschacht zugänglich und kann dadurch vom Benutzer über den Akkuschacht aus selbigem herausgenommen werden, wenn zuvor der Akkupack aus dem Akkuschacht entnommen wurde. Das Filterelement kann z.B. in Form eines Filterrings angeordnet sein, der sich strömungstechnisch zwischen dem Gehäuseeintritt der Kühlluftführung in den Akkuschacht und dem Luftaustritt befindet und durch den der Akkupack hindurchgesteckt werden kann, wenn er in den Akkuschacht eingeschoben wird.

Gemäß einem weiteren Aspekt der Erfindung ist das Filterelement an einer dem Antriebsmotor zugewandten Seitenwand des Akkuschachts angeordnet. Bei dieser Positionierung des Filterelements an einer dem Antriebsmotor zugewandten Seitenwand des Akkuschachts ist eine leichte Zugänglichkeit des Filterelements über den Akkuschacht gegeben, und die Kühlluft kann vom Filterelement aus auf relativ kurzem Weg zum Antriebsmotor geführt werden. Auch bei dieser Positionierung ist das Filterelement direkt über den Akkuschacht zugänglich und kann dadurch vom Benutzer über den Akkuschacht aus selbigem herausgenommen werden, wenn zuvor der Akkupack aus dem Akkuschacht entnommen wurde. Der Akkuschacht kann hierbei insbesondere am Luftaustritt des Akkuschachts positioniert sein, wodurch der Akkuschacht unabhängig vom Vorhandensein des Filterelements nach den Erfordernissen des Akkupacks konfiguriert werden kann.

Gemäß einem weiteren Aspekt der Erfindung ist der Akkuschacht wenigstens in einem schachteintrittsseitigen Teilbereich von einer Einhausung umgrenzt, die abnehmbar am übrigen Gerätegehäuse angebracht ist. Diese Maßnahme hat den Vorteil, dass der Benutzer bei Bedarf die Einhausung und damit den Akkuschacht insgesamt oder wenigstens einen eintrittsseitigen Teil desselben vom restlichen Gerätegehäuse abnehmen kann, wodurch beispielsweise die Zugänglichkeit zum Filterelement und gegebenenfalls weiteren im Akkuschachtbereich angeordneten Gerätekomponenten erleichtert werden kann.

In einer Weiterbildung der Erfindung ist das Filterelement über den Akkuschacht herausnehmbar. Mit dieser Maßnahme kann das Filterelement vom Benutzer bei Bedarf zum Beispiel zu Reinigungszwecken oder zwecks Austauschs durch ein neues Filterelement in einfacher Weise über den Akkuschacht herausgenommen und in Umkehr dieses Demontagevorgangs auch wieder eingesetzt werden.

In einer Weiterbildung der Erfindung befinden sich der Gehäuseeintritt und der Gehäuseaustritt der Kühlluftführung auf im Wesentlichen einander entgegengesetzten Seiten des Gerätegehäuses. Diese Maßnahme hat für kühllufttechnische Vorteile. So lässt sich dadurch verhindern, dass aus dem Gehäuseaustritt austretende, erwärmte Kühlluft gleich wieder am Gehäuseeintritt in das Gerätegehäuse eingesaugt wird. Zudem kann der Gehäuseeintritt an einer hinsichtlich Schmutzbelastung unkritischen Stelle des Gerätegehäuses angeordnet werden, um zu vermeiden, dass die in das Gerätegehäuse eingesaugte Kühlluft unerwünscht schmutzbeladen ist.

In einer Weiterbildung der Erfindung ist im austrittsseitigen Luftführungsabschnitt eine Kühlkörperstruktur eines im Gerätegehäuse aufgenommenen Elektronikbauteils angeordnet. Dadurch kann mit dem durch die Kühlluftführung geführten Kühlluftstrom auch das Elektronikbauteil gekühlt werden.

In einer Weiterbildung der Erfindung umfasst die Kühlluftführung ein stromabwärts des Antriebsmotors angeordnetes Gebläse. Diese Maßnahme bietet für entsprechende Anwendungen Vorteile hinsichtlich der Gebläseanordnung und der Luftstromführung. Durch die Positionierung des Gebläses stromabwärts des Antriebsmotors befindet sich der Antriebsmotor im Saugbereich des Gebläses, und das Gebläse kann mit relativ geringem Aufwand antriebstechnisch an den Antriebsmotor angekoppelt werden.

In einer Ausgestaltung der Erfindung weist das Gebläse ein sich zu einem Gebläseaustritt hin trichterförmig erweiterndes Gebläsegehäuse auf, wobei der Gebläseaustritt den Gehäuseaustritt der Kühlluftführung bildet. Dies stellt eine vorteilhafte Gestaltung der Führung des Kühlluftstroms im Bereich des Gebläses dar. Der von der Kühlluftführung geführte Kühlluftstrom tritt als sich trichterförmig erweiternder Luftstrom aus dem Gerätegehäuse aus, wodurch der Luftstrom mit relativ geringer Geschwindigkeit austreten kann und sich die Geräuschentwicklung gering halten lässt.

In einer Weiterbildung der Erfindung ist die Einhausung umfangsseitig geschlossen. Dementsprechend ist in diesem Fall der Akkuschacht insgesamt oder wenigstens in einem eintrittsseitigen Teil umfangsseitig geschlossen ausgeführt, was gestalterische Vorteile und/oder Vorteile hinsichtlich der Kühlluftführung im Akkuschachtbereich und/oder hinsichtlich der Unterbringung des Akkupacks im Akkuschacht haben kann.

In einer Weiterbildung der Erfindung ist das Arbeitsgerät gemäß einem vorteilhaften Anwendungsfall als handgetragene, akkubetriebene Motorsäge realisiert.

Vorteilhafte Ausführungsformen der Erfindung sind in den Zeichnungen dargestellt. Diese und weitere Ausführungsformen der Erfindung werden nachfolgend beschrieben. Hierbei zeigen:
- Fig. 1: eine Perspektivansicht eines handgeführten, akkubetriebenen Arbeitsgeräts auf einen Gehäusebereich mit Akkuschacht und darin aufgenommenem Akkupack,
- Fig. 2: eine detailliertere Perspektivansicht des Akkuschachtbereichs ohne eingesetzten Akkupack,
- Fig. 3: eine Längsschnittansicht des Gerätebereichs von Fig. 1,
- Fig. 4: eine Querschnittansicht längs einer Linie IV-IV von Fig. 3 und
- Fig. 5: eine Seitenansicht eines Gebläsebereichs des Geräts ohne äußere Gehäuseschale.

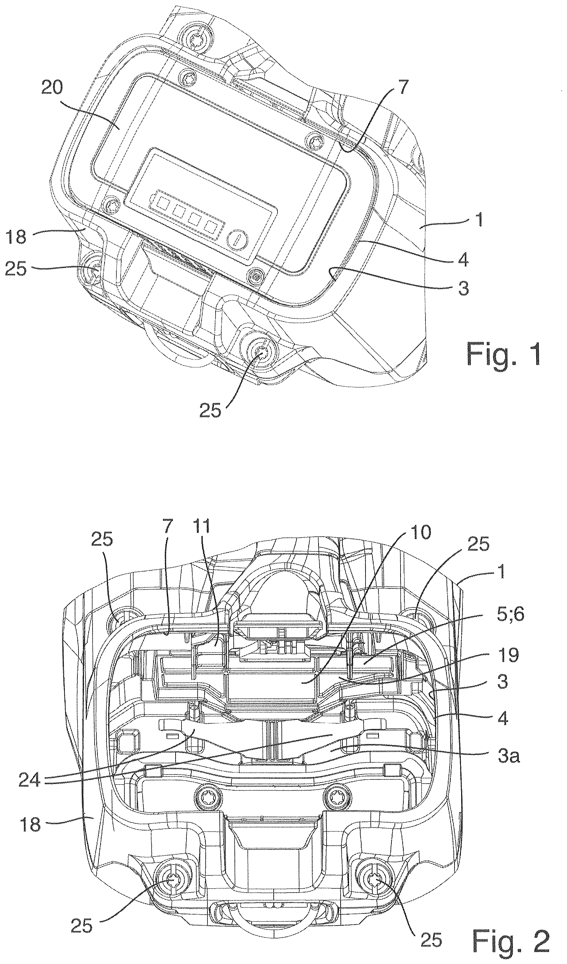

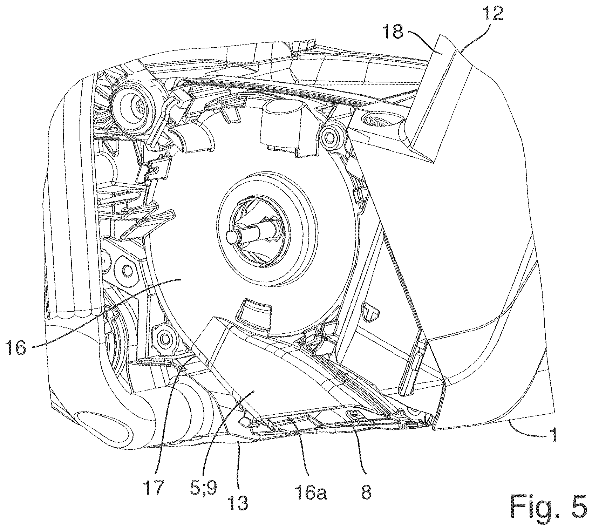

Das in den Fig. 1 bis 5 gezeigte Arbeitsgerät umfasst ein Gerätegehäuse 1, einen elektrischen Antriebsmotor 2 im Gerätegehäuse 1, einen Akkuschacht 3 im Gerätegehäuse 1 zur Aufnahme eines entnehmbaren Akkupacks 20, eine Kühlluftführung 5 im Gerätegehäuse 1 und ein Filterelement 10, das in der Kühlluftführung 5 über den Akkuschacht 3 zugänglich angeordnet ist. Das gezeigte Arbeitsgerät kann insbesondere als handgetragene, akkubetriebene Motorsäge konfiguriert sein. In alternativen Ausführungen ist das erfindungsgemäße Arbeitsgerät als ein anderes handgeführtes, akkubetriebenes Garten- oder Forstarbeitsgerät ausgeführt, z.B. als Rasentrimmer, Rasenmäher, Winkelschleifer, Bohrmaschine oder dergleichen.

Die Kühlluftführung 5 beinhaltet einen eintrittsseitigen Luftführungsabschnitt 6 und einen anschließenden, austrittsseitigen Luftführungsabschnitt 9. Der eintrittsseitige Luftführungsabschnitt 6 erstreckt sich von einem Gehäuseeintritt 7 in den Akkuschacht 3 bis zu einem Luftaustritt 19 aus dem Akkuschacht 3. Der austrittseitige Luftführungsabschnitt 9 führt vom Luftaustritt 19 des Akkuschachts 3 zum Antriebsmotor 2, so dass der Antriebsmotor 2 durch einen von der Kühlluftführung 5 geführten Kühlluftstrom gekühlt werden kann. Optional wird auch der Akkupack 20 vom Kühlluftstrom gekühlt. Vom Antriebsmotor 2 führt der austrittseitige Luftführungsabschnitt 9 zu einem Gehäuseaustritt 8 weiter.

Der Akkupack 20 ist vorzugsweise über eine zugehörige Schachtöffnung 4 in den Ackuschacht 3 einsetzbar und aus diesem entnehmbar. Der Gehäuseeintritt 7 des eintrittsseitigen Luftführungsabschnitts 6 in den Akkuschacht 3 befindet sich in diesem Fall, wie im gezeigten Beispiel, bevorzugt auf der gleichen Seite des Akkuschachts 3 wie die Schachtöffnung 4. In einer bevorzugten Realisierung ist der Gehäuseeintritt 7 des eintrittsseitigen Luftführungsabschnitts 6 in den Akkuschacht 3 von einem durch den eingesetzten Akkupack 20 nicht belegten Teil der Schachtöffnung 4 gebildet. Von der Schachtöffnung 4 aus erstreckt sich der Akkuschacht 3 wie im gezeigten Beispiel vorzugsweise in das Gerätegehäuse 1 hinein, d.h. mit einer zur zugehörigen Seite des Gerätegehäuses1 nicht-parallelen Schachtlängsrichtung, entlang der das Einsetzen des Akkupacks 20 erfolgt, in das Innere des Gerätegehäuses1. In alternativen Ausführungen erstreckt sich der Akkuschacht 20 längs einer Seite des Gerätegehäuses 1.

In entsprechenden Ausführungen verbleibt zwischen Begrenzungswandungen des Ackuschachts 3 und dem eingesetzten Akkupack 20 auf wenigstens einer Seite ein Luftraum als Teil des eintrittsseitigen Luftführungsabschnitts 6. Im gezeigten Beispiel besteht ein solcher Luftraum an allen vier Umfangsseiten zwischen dem quaderförmigen Akkupack 20 und der entsprechenden Hohlraumgestaltung des Akkuschachts 3, so dass im eintrittsseitigen Luftführungsabschnitt 6 geführte Kühlluft den in den Akkuschacht 3 eingesetzten Akkupack 20 am gesamten Umfang vom Gehäuseeintritt 7 bis zum Luftaustritt 19 aus dem Akkuschacht 3 umströmt. Auch an einer Bodenseite 3a des Akkuschachts 3 verbleibt ein solcher Luftraum, wobei dort im gezeigten Beispiel Federzungen 24 angeordnet sind, die den in den Akkuschacht 3 eingesetzten und mittels einer Verriegelung festgehaltenen Akkupack 20 nach Lösen der Verriegelung ein Stück weit aus dem Akkuschacht 3 herausbewegen, wodurch das Entnehmen des Akkupacks 20 aus dem Akkuschacht 3 erleichtert wird.

Die Zugänglichkeit des Filterelements 10 über den Akkuschacht 3 bedeutet, dass das Filterelement 10 für einen Benutzer zugänglich ist, wenn sich der Akkupack 20 nicht im Akkuschacht 3 befindet. Diese Zugänglichkeit erlaubt dem Benutzer beispielsweise ein Reinigen des Filterelements 10 über den Akkuschacht 3. Wenn der Akkupack 20 in den Akkuschacht 3 eingesetzt ist, schützt und verbirgt er das Filterelement 10.

In vorteilhaften Ausführungen ist das Filterelement 10 wie beim gezeigten Beispiel am Luftaustritt 19 des Akkuschachts 3 angeordnet. Der gesamte Innenraum des Ackuschachts 3 bleibt dadurch frei vom Filterelement 10. In alternativen Ausführungen ist das Filterelement 10 im Inneren des Akkuschachts 3 in Luftströmungsrichtung mit Abstand vor dem des Luftaustritts 19 des Akkuschachts 3 angeordnet, d.h. stromaufwärts des Luftaustritts 19. Dies kann beispielsweise dann vorteilhaft sein, wenn der Luftaustritt 19 des Akkuschachts 3 nicht ohne weiteres über den Akkuschacht 3 zugänglich ist oder wenn luftströmungstechnische Gründe dafür sprechen, das Filterelement 10 mit Abstand vom Luftaustritt 19 im Akkuschacht 3 anzuordnen. Das Filterelement 10 kann insbesondere, wie gezeigt, als flächiges, planes Filterelement ausgeführt sein, das sich im Wesentlichen in einer Ebene erstreckt.

In entsprechenden Ausführungen ist das Filterelement 10 im Gerätegehäuse 1 an einer dem Antriebsmotor 2 zugewandten Seitenwand 11 des Akkuschachts 3 angeordnet, wie im gezeigten Beispiel. In alternativen Ausführungen ist das Filterelement 10 am statt im Gerätegehäuse 1 angeordnet und/oder es ist nicht an der dem Antriebsmotor 2 zugewandten Seitenwand 11 des Akkuschachts 3, sondern an einer anderen Seitenwand des Akkuschachts 3 und entsprechend im oder am Gerätegehäuse 1 angeordnet.

In vorteilhaften Ausführungsformen ist das Filterelement 10 wie beim gezeigten Beispiel über den Akkuschacht 3 herausnehmbar. In diesem Fall ist das Filterelement 10 für den Benutzer über den Akkuschacht 3 nicht nur zugänglich, sondern kann vom Benutzer über den Akkuschacht 3 herausgenommen werden, z.B. um es außerhalb des Gerätegehäuses reinigen zu können oder um es im Wartungsfall durch ein neues Filterelement ersetzen zu können. Dazu ist das Filterelement 10 vorzugsweise lösbar im Gerätegehäuse 1, bevorzugt im Akkuschacht 3, bzw. an der betreffenden Seitenwand 11 des Akkuschachts 3 angeordnet, z.B. mittels einer entsprechenden herkömmlichen Clips-, Klett-, Rast- oder Schraubverbindung. Entsprechend kann das Filterelement 10 dann auch wieder über den Akkuschacht 3 eingesetzt und am Einsatzort festgelegt werden.

In vorteilhaften Ausführungen befinden sich wie beim gezeigten Beispiel der Gehäuseeintritt 7 und der Gehäuseaustritt 8 der Kühlluftführung 5 auf im Wesentlichen einander entgegengesetzten Seiten 12, 13 des Gerätegehäuses. Im gezeigten Beispiel handelt es sich bei diesen beiden entgegengesetzten Gerätegehäuseseiten 12, 13 um eine in einer horizontalen Lage des Arbeitsgeräts obere bzw. untere Gehäuseseite. Die Anordnung des Gehäuseeintritts 7 und des Gehäuseaustritts 8 der Kühlluftführung 5 auf zwei entgegengesetzten Gerätegehäuseseiten beugt einem unerwünschten Wiederansaugen von aus dem Gehäuseaustritt 8 ausgeblasener, erwärmter Kühlluft in den Gehäuseeintritt 7 vor. In alternativen Ausführungen können sich der Gehäuseeintritt 7 und der Gehäuseaustritt 8 der Kühlluftführung 5 an einer gleichen Gerätegehäuseseite oder an zwei benachbarten, aneinander angrenzenden Seiten des Gerätegehäuses 1 befinden. In jedem Fall kann bei Bedarf dafür gesorgt werden, dass sich der Gehäuseeintritt 7 möglichst weit von einem potenziell schmutzbeladenen Bereich des Arbeitsgeräts entfernt befindet. So kann beispielsweise der Gehäuseeintritt 7 der Kühlluftführung 5 an einer Oberseite des Gerätegehäuses 1 angeordnet sein, wenn im Betrieb des Arbeitsgeräts eine etwaige Schmutzentstehung primär an einer Unterseite des Arbeitsgeräts zu erwarten ist.

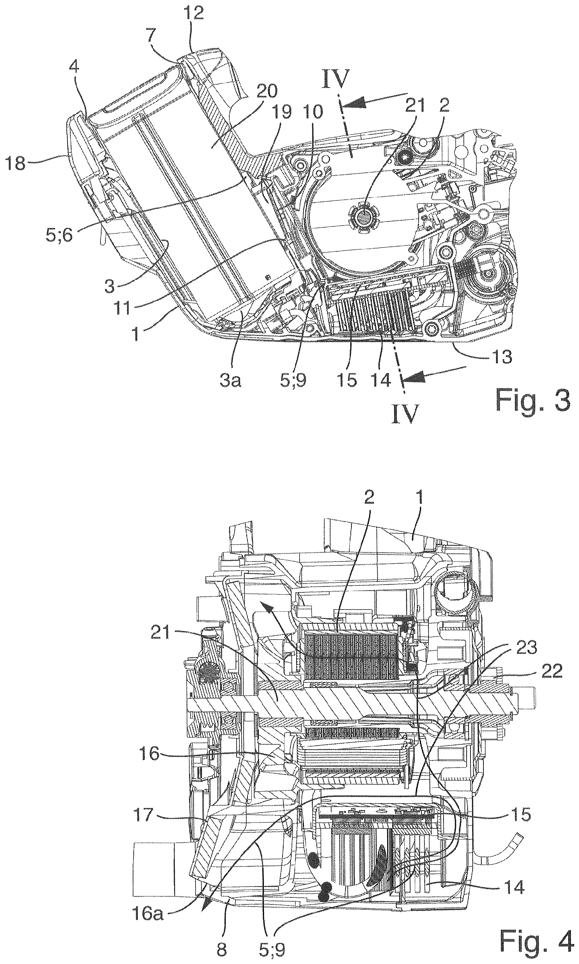

In entsprechenden Ausführungen ist wie im gezeigten Beispiel im austrittseitigen Luftführungsabschnitt 9 eine Kühlkörperstruktur 14 eines im Gerätegehäuse 1 aufgenommenen Elektronikbauteils 15 angeordnet. Dies ermöglicht eine Kühlung des Elektronikbauteils 15 durch den in der Kühlluftführung 5 geführten Kühlluftstrom. Die Kühlkörperstruktur 14 kann beispielsweise eine Anordnung von Stiftkühlkörpern, wie gezeigt, und/oder von flächigen Kühlrippen etc. beinhalten. Beim Elektronikbauteil 15 kann es sich beispielsweise um Elektronikkomponenten für eine elektronische Steuerung des Antriebsmotors 2 und/oder je nach Arbeitsgerät weiteren vorhandenen, elektronisch steuerbaren Komponenten handeln. Im gezeigten Beispiel liegt die Kühlkörperstruktur 14 des Elektronikbauteils 15 im austrittsseitigen Luftführungsabschnitt 9 der Kühlluftführung 5 stromaufwärts des Antriebsmotors 2. Dies ist in Fig. 4 anhand von den Kühlluftstrom repräsentierenden Luftströmungspfeilen 23 zu erkennen, die den Luftströmungsverlauf im austrittseitigen Luftführungsabschnitt 9 der Kühlluftführung 5 veranschaulichen.

In entsprechenden Ausführungen umfasst die Kühlluftführung 5 wie im gezeigten Beispiel ein stromabwärts des Antriebsmotors 2 angeordnetes Gebläse 16. Das Gebläse 16 stellt das aktive Element zum Führen der Kühlluft durch den eintrittsseitigen und austrittsseitigen Luftführungsabschnitt 6, 9 dar. Das Gebläse 16 ist vorzugsweise durch den Antriebsmotor 2 antreibbar und sitzt in entsprechenden Realisierungen wie beim gezeigten Beispiel auf einer gleichen Antriebswelle 21 des Antriebsmotors 2 wie ein vom Antriebsmotor 2 angetriebenes Arbeitswerkzeug des Arbeitsgeräts, z.B. eine Sägekette einer Motorsäge. In Fig. 4 ist diesbezüglich ein Kettenrad 22 für eine solche Sägekette gezeigt, das sich auf der dem Gebläse 16 gegenüberliegenden Seite des Antriebsmotors 2 befindet.

Durch die Anordnung des Gebläses 16 stromabwärts des Antriebsmotors 2 liegen der gesamte eintrittsseitige Luftführungsabschnitt 6 sowie der austrittsseitige Luftführungsabschnitt 9 bis zum Gebläse 16 im Saugbereich des Gebläses 16, d.h. der Akkupack 20, das Filterelement 10 und der Antriebsmotor 2 sowie die optionale Kühlkörperstruktur 14 des Elektronikbauteils 15 liegen in der vom Gebläse 16 erzeugten Kühlluft-Saugströmung. In alternativen Ausführungen ist das Gebläse 16 an einer stromaufwärts des Antriebsmotors 2 gelegenen Stelle im austrittseitigen Luftführungsabschnitt 9 oder bereits im eintrittsseitigen Luftführungsabschnitt 6 positioniert.

In vorteilhaften Ausführungen weist das Gebläse 16 ein sich zu einem Gebläseaustritt 16a hin trichterförmig erweiterndes Gebläsegehäuse 17 auf, wie im gezeigten Beispiel, wobei der Gebläseaustritt 16a den Gehäuseaustritt 8 der Kühlluftführung 5 bildet. In alternativen Ausführungen hat das Gebläsegehäuse 17 zum Gebläseaustritt 16a hin eine andere Form, z.B. mit gleichbleibendem oder abnehmendem Luftdurchtrittsquerschnitt, und/oder der Gebläseaustritt 16a befindet sich an einer vom Gehäuseaustritt 8 der Kühlluftführung 5 stromaufwärts beabstandeten Stelle.

In entsprechenden Ausführungen ist der Akkuschacht 3 wenigstens in einem schachteintrittsseitigen Teilbereich von einer Einhausung 18 umgrenzt, die abnehmbar am übrigen Gerätegehäuse 1 angebracht ist. Im gezeigten Beispiel ist die Einhausung 18 speziell mittels einer Schraubverbindung 25 abnehmbar am übrigen Gerätegehäuse 1 angebracht, vorzugsweise unter Verwendung einer Mehrzahl zugehöriger Schrauben, wie gezeigt. Das Abnehmen der Einhausung 18 kann in entsprechenden Fällen das Demontieren des Filterelements 10 erleichtern bzw. dessen Zugänglichkeit zusätzlich erleichtern. In alternativen Ausführungen ist der Akkuschacht 3 insgesamt von einem unlösbar, d.h. nicht zerstörungsfrei lösbar, mit dem übrigen Gerätegehäuse 1 verbundenen Teil des Gerätegehäuses 1 gebildet, beispielsweise in einer mit einem angrenzenden Teil des Gerätegehäuses 1 einstückigen Ausführung.

In vorteilhaften Ausführungen ist die Einhausung 18 wie im gezeigten Beispiel umfangsseitig geschlossen. Dadurch kann die Einhausung 18 allseitig als äußere Begrenzung für den eintrittsseitigen Luftführungsabschnitt 6 dienen, wobei sich der Gehäuseeintritt 7 des eintrittsseitigen Luftführungsabschnitts 6 in den Akkuschacht 3 in diesem Fall bevorzugt an einer offenen Stirnseite der Einhausung 18 befindet, wobei die offene Stirnseit der Einhausung 18 die Schachtöffnung 4 bereitstellt, über die der Akkupack 20 in den Akkuschacht 3 einsetzbar ist.

Wie die gezeigten und weiteren oben erläuterten Ausführungsbeispiele deutlich machen, stellt die Erfindung ein handgeführtes, akkubetriebenes Arbeitsgerät mit vorteilhaften Eigenschaften insbesondere hinsichtlich Kühlluftführung und Anordnung eines Filterelements in der Kühlluftführung zur Verfügung. Die spezifische Kühlluftführung ermöglicht eine effektive Kühlung für den Akkupack und den Antriebsmotor und optional weiterer zu kühlender Gerätekomponenten wie Elektronikbauteile. Die Kühlluft kann bei Bedarf in einem hinsichtlich Schmutzanfall unkritischen Bereich des Arbeitsgeräts erfolgen. Das Gerätegehäuse ist bevorzugt geeignet dicht ausgeführt, um die definierte Kühlluftführung zu gewährleisten. Das Filterelement ist in der Kühlluftführung über den Akkuschacht zum Beispiel für Reinigungszwecke zugänglich und geschützt angeordnet.

## Patentansprüche

1. Handgeführtes, akkubetriebenes Arbeitsgerät mit
- einem Gerätegehäuse (1),
- einem elektrischen Antriebsmotor (2) im Gerätegehäuse (1),
- einem Akkuschacht (3) im Gerätegehäuse (1) zur Aufnahme eines entnehmbaren Akkupacks,
- einer Kühlluftführung (5) im Gerätegehäuse (1), die einen eintrittsseitigen Luftführungsabschnitt (6), der sich von einem Gehäuseeintritt (7) in den Akkuschacht (3) bis zu einem Luftaustritt (19) aus dem Akkuschacht (3) erstreckt, und einen austrittsseitigen Luftführungsabschnitt (9) umfasst, der vom Luftaustritt (19) des Akkuschachts (3) zum Antriebsmotor (2) und von dort zu einem Gehäuseaustritt (8) weiterführt, und
- einem Filterelement (10), das in der Kühlluftführung (5) über den Akkuschacht (3) zugänglich angeordnet ist,
**dadurch gekennzeichnet, dass**
- - das Filterelement (10) im Inneren des Akkuschachts (3) in Luftströmungsrichtung vor dem Luftaustritt (19) des Akkuschachts (3) angeordnet ist und/oder
- das Filterelement (10) an einer dem Antriebsmotor (2) zugewandten Seitenwand (11) des Akkuschachts (3) angeordnet ist und/oder
- der Akkuschacht (3) wenigstens in einem schachteintrittsseitigen Teilbereich von einer Einhausung (18) umgrenzt ist, die abnehmbar am übrigen Gerätegehäuse (1) angebracht ist.

2. Handgeführtes, akkubetriebenes Arbeitsgerät nach Ansprüche 1 oder 2, weiter **dadurch gekennzeichnet, dass** das Filterelement (10) über den Akkuschacht (3) herausnehmbar ist.

3. Handgeführtes, akkubetriebenes Arbeitsgerät nach Anspruch 1 oder 2, weiter **dadurch gekennzeichnet, dass** sich der Gehäuseeintritt (7) und der Gehäuseaustritt (8) der Kühlluftführung (5) auf im Wesentlichen einander entgegengesetzten Seiten (12, 13) des Gerätegehäuses (1) befinden.

4. Handgeführtes, akkubetriebenes Arbeitsgerät nach einem der Ansprüche 1 bis 3, weiter **dadurch gekennzeichnet, dass** im austrittsseitigen Luftführungsabschnitt (9) eine Kühlkörperstruktur (14) eines im Gerätegehäuse (1) aufgenommenen Elektronikbauteils (15) angeordnet ist.

5. Handgeführtes, akkubetriebenes Arbeitsgerät nach einem der Ansprüche 1 bis 4, weiter **dadurch gekennzeichnet, dass** die Kühlluftführung (5) ein stromabwärts des Antriebsmotors (2) angeordnetes Gebläse (16) umfasst.

6. Handgeführtes, akkubetriebenes Arbeitsgerät nach Anspruch 5, weiter **dadurch gekennzeichnet, dass** das Gebläse (16) ein sich zu einem Gebläseaustritt (16a) hin trichterförmig erweiterndes Gebläsegehäuse (17) aufweist und der Gebläseaustritt (16a) den Gehäuseaustritt (8) der Kühlluftführung (5) bildet.

7. Handgeführtes, akkubetriebenes Arbeitsgerät nach einem der Ansprüche 1 bis 6, weiter **dadurch gekennzeichnet, dass** die Einhausung (18) umfangsseitig geschlossen ist.

8. Handgeführtes, akkubetriebenes Arbeitsgerät nach einem der Ansprüche 1 bis 7, weiter **dadurch gekennzeichnet, dass** es als handgetragene, akkubetriebene Motorsäge konfiguriert ist.

## Claims

1. Hand-guided, battery-operated working apparatus, comprising
- an apparatus housing (1),
- an electric drive motor (2) in the apparatus housing (1),
- a battery tray (3) in the apparatus housing (1) to accommodate a removable battery pack,
- a cooling air guide (5) in the apparatus housing (1), which guide comprises an inlet-side air guide portion (6), which extends from a housing inlet (7) into the battery tray (3) to an air outlet (19) from the battery tray (3), and an outlet-side air guide portion (9), which leads from the air outlet (19) of the battery tray (3) to the drive motor (2) and, from there, onwards to a housing outlet (8), and
- a filter element (10), which is arranged in the cooling air guide (5) in such a way as to be accessible via the battery tray (3),
**characterized in that**
- the filter element (10) is arranged in the interior of the battery tray (3), ahead of the air outlet (19) of the battery tray (3) in the air flow direction, and/or
- the filter element (10) is arranged on a side wall (11) of the battery tray (3) facing the drive motor (2), and/or
- the battery tray (3) is bounded, at least in a partial region on a tray inlet side, by a casing (18), which is mounted removably on a remainder of the apparatus housing (1).

2. Hand-guided, battery-operated working apparatus according to Claim 1, further **characterized in that** the filter element (10) is removable via the battery tray (3).

3. Hand-guided, battery-operated working apparatus according to Claim 1 or 2, further **characterized in that** the housing inlet (7) and the housing outlet (8) of the cooling air guide (5) are situated on substantially opposite sides (12, 13) of the apparatus housing (1).

4. Hand-guided, battery-operated working apparatus according to any one of Claims 1 to 3, further **characterized in that** a heat sink structure (14) of an electronic component (15) accommodated in the apparatus housing (1) is arranged in the outlet-side air guide portion (9).

5. Hand-guided, battery-operated working apparatus according to any one of Claims 1 to 4, further **characterized in that** the cooling air guide (5) comprises a fan (16) arranged downstream of the drive motor (2).

6. Hand-guided, battery-operated working apparatus according to Claim 5, further **characterized in that** the fan (16) has a fan housing (17) that widens in the form of a funnel towards a fan outlet (16a), and the fan outlet (16a) forms the housing outlet (8) of the cooling air guide (5).

7. Hand-guided, battery-operated working apparatus according to any of Claims 1 to 6, further **characterized in that** the casing (18) has a closed circumference.

8. Hand-guided, battery-operated working apparatus according to any one of Claims 1 to 7, further **characterized in that** it is configured as a handheld, battery-operated power saw.

## Revendications

1. Appareil de travail à main, fonctionnant sur accumulateur, avec
- un boîtier d'appareil (1),
- un moteur d'entraînement électrique (2) dans le boîtier d'appareil (1),
- un compartiment d'accumulateur (3) dans le boîtier d'appareil (1) pour recevoir un bloc d'accumulateur amovible,
- un guidage d'air de refroidissement (5) dans le boîtier d'appareil (1), qui comprend une section de guidage d'air (6) côté entrée, qui s'étend d'une entrée de boîtier (7) dans le compartiment d'accumulateur (3) jusqu'à une sortie d'air (19) hors du compartiment d'accumulateur (3), et une section de guidage d'air (9) côté sortie, qui conduit de la sortie d'air (19) du compartiment d'accumulateur (3) au moteur d'entraînement (2) et de là à une sortie de boîtier (8), et
- un élément filtrant (10) agencé dans le guidage d'air de refroidissement (5) accessible via le compartiment d'accumulateur (3),
**caractérisé en ce que**
- l'élément filtrant (10) est agencé à l'intérieur du compartiment d'accumulateur (3) dans la direction d'écoulement de l'air avant la sortie d'air (19) du compartiment d'accumulateur (3) et/ou
- l'élément filtrant (10) est agencé sur une paroi latérale (11) du compartiment d'accumulateur (3) tournée vers le moteur d'entraînement (2) et/ou
- le compartiment de batterie (3) est délimité, au moins dans une zone partielle côté entrée du compartiment, par une enceinte (18) qui est montée de manière amovible sur le reste du boîtier d'appareil (1).

2. Appareil de travail à main fonctionnant sur accumulateur selon la revendication 1 ou 2, **caractérisé en outre en ce que** l'élément filtrant (10) peut être retiré par le biais du compartiment d'accumulateur (3).

3. Outil de travail à main fonctionnant sur accumulateur selon la revendication 1 ou 2, **caractérisé en outre en ce que** l'entrée de boîtier (7) et la sortie de boîtier (8) du guidage d'air de refroidissement (5) se trouvent sur des côtés (12, 13) essentiellement opposés l'un à l'autre du boîtier d'appareil (1).

4. Appareil de travail à main fonctionnant sur accumulateur selon l'une quelconque des revendications 1 à 3, **caractérisé en outre en ce qu'**une structure de corps de refroidissement (14) d'un composant électronique (15) reçu dans le boîtier d'appareil (1) est agencée dans la section de guidage d'air (9) côté sortie.

5. Appareil de travail à main fonctionnant sur accumulateur selon l'une quelconque des revendications 1 à 4, **caractérisé en outre en ce que** le guidage d'air de refroidissement (5) comprend un ventilateur (16) agencé en aval du moteur d'entraînement (2).

6. Appareil de travail à main fonctionnant sur accumulateur selon la revendication 5, **caractérisé en outre en ce que** le ventilateur (16) présente un boîtier de ventilateur (17) s'élargissant en forme d'entonnoir vers une sortie de ventilateur (16a) et la sortie de ventilateur (16a) forme la sortie de boîtier (8) du guidage d'air de refroidissement (5).

7. Appareil de travail à main fonctionnant sur accumulateur selon l'une quelconque des revendications 1 à 6, **caractérisé en outre en ce que** l'enceinte (18) est fermée sur sa périphérie.

8. Appareil de travail à main fonctionnant sur accumulateur selon l'une quelconque des revendications 1 à 7, **caractérisé en outre en ce qu'**il est configuré sous forme de tronçonneuse à main fonctionnant sur accumulateur.
